# EUROPÄISCHE PATENTSCHRIFT

(11) **EP 3 908 158 B1**
(45) Veröffentlichungstag und Bekanntmachung des Hinweises auf die Patenterteilung: **26.03.2025**
(21) Anmeldenummer: 20700481.3
(22) Anmeldetag: 10.01.2020
(51) Int. Cl.: A47C 7/42, F16B 12/38

(54) **SITZMÖBELCHASSIS**
SEATING FURNITURE CHASSIS
CHÂSSIS DE SIÈGE

(30) Priorität: 10.01.2019 DE 202019100107 U
(43) Veröffentlichungstag der Anmeldung: 17.11.2021
(73) Patentinhaber: Innotec Motion GmbH, 59558 Lippstadt (DE)
(72) Erfinder: MACKERT, Michael, 59602 Rüthen (DE)
(74) Vertreter: Schäperklaus, Jochen
(86) Internationale Anmeldenummer: PCT/EP2020/050512
(87) Internationale Veröffentlichungsnummer: WO 2020/144311

(56) Entgegenhaltungen:
- EP-A1- 2 792 276
- DE-A1- 102014 002 215
- DE-B4- 10 105 364
- US-A1- 2011 215 630

## Beschreibung

Die vorliegende Erfindung betrifft ein Sitzmöbelchassis gemäß dem Oberbegriff des Anspruchs 1.

Aus dem Stand der Technik sind Sitzmöbelchassis mit einem an Befestigungsmitteln eines Grundkörpers befestigbaren Rückenteil bekannt.

US 2011/0215630 A1 offenbart eine Stuhlbaugruppe, die einen Sitz, eine Rückenlehne und mindestens eine Armlehne umfasst, die lösbar miteinander verbunden sind, ohne dass die Verwendung von Werkzeugen oder besondere Fähigkeiten erforderlich sind. Die Stuhlbaugruppe kann zerlegt in einer kompakten, platzsparenden Verpackung versandt werden, um die Transportkosten zu reduzieren. Ein am Arm befestigter Armverbindungsbügel wird verschiebbar und abnehmbar von einer am Sitz befestigten Armbügelaufnahme aufgenommen, wodurch der Arm lösbar mit dem Sitz verbunden ist. Ein an der Rückenlehne befestigter Rückenverbindungsbügel wird verschiebbar und abnehmbar von einer am Arm befestigten Rückenlehnenaufnahme aufgenommen, wodurch die Rückenlehne abnehmbar mit dem Arm verbunden wird. Die Aufnahme für den Rückenbügel umfasst einen drehbaren Verriegelungsfreigabehebel, der so ausgelegt ist, dass er sich in und aus dem Verriegelungseingriff mit dem Rückenverbindungsbügel dreht, nachdem der Rückenverbindungsbügel in die lösbare Aufnahme durch die Aufnahme für den Rückenbügel gleitet.

DE 10 2014 002 215 A1 offenbart ein Sitzmöbel mit einem Gestell und einem Anbauteil. Das Anbauteil ist über eine Montageeinheit umfassend wenigstens zwei separate Verbindungen mit dem Gestell verbunden. Die erste Verbindung ist eine Steckverbindung. Das Anbauteil ist im eingesteckten Zustand gegenüber dem Gestell schwenkbar gehalten. Die zweite Verbindung ist eine Rastverbindung mit einer Rastnase und einer von der Rastnase hintergriffenen Hinterschneidung. Die Rastnase und die Hinterschneidung der zweiten Verbindung sind durch ein Verschwenken der ersten Verbindung im eingesteckten Zustand verrastbar.

Demgegenüber liegt der vorliegenden Erfindung die Aufgabe zugrunde, ein Sitzmöbelchassis mit einem besonders einfach daran zu befestigendem Rückenteil zu schaffen. Außerdem soll ein Baukastensystem mit einem solchen Sitzmöbelchassis und mehreren Rückenteilen und ein Verfahren zur Befestigung eines Rückenteils eines solchen Sitzmöbelchassis an einem Grundkörper eines solchen Sitzmöbelchassis geschaffen werden.

Diese Aufgabe wird durch ein Sitzmöbelchassis nach Anspruch 1, ein Baukastensystem gemäß Anspruch 11 und ein Verfahren gemäß Anspruch 12 gelöst. Ausführungsformen der Erfindung sind in den abhängigen Ansprüchen angegeben.

Das Sitzmöbelchassis umfasst einen Grundkörper, Befestigungsmittel und ein Rückenteil. Unter einem Grundkörper wird dabei im Rahmen dieser Beschreibung insbesondere ein Konstrukt verstanden, das einen Sitzflächenrahmen und einen oder mehrere Standfüße umfasst, mit denen das Sitzmöbelchassis auf einer Bodenfläche aufstellbar ist. Der Sitzflächenrahmen kann eine Sitzfläche umrahmen. Ein Benutzer kann nach Polsterung der Sitzfläche auf der Polsterung sitzen.

Die Befestigungsmittel sind am Grundkörper angeordnet. Beispielsweise können sie in einem hinteren Randbereich des Grundkörpers angeordnet sein. Dies kann insbesondere ein Randbereich sein, der bei bestimmungsgemäßer Benutzung des Sitzmöbelchassis hinter einem auf dem gepolsterten Sitzflächenrahmen sitzenden Benutzer angeordnet ist.

Das Rückenteil ist lösbar an den Befestigungsmitteln befestigbar. Unter einer lösbaren Befestigung wird dabei im Rahmen dieser Beschreibung insbesondere verstanden, dass das Rückenteil intuitiv und werkzeuglos an den Befestigungsmitteln befestigt werden kann und auch wieder werkzeuglos von den Befestigungsmitteln gelöst werden kann. Dabei ist zu beachten, dass sowohl bei der Befestigung als auch bei Lösung der Befestigung weder das Rückenteil noch die Befestigungsmittel beschädigt werden.

Unter einem Rückenteil wird im Rahmen dieser Beschreibung insbesondere ein Teil verstanden, das bei bestimmungsgemäßer Benutzung des Sitzmöbelchassis einen Rücken eines Benutzers abstützt.

Die Befestigungsmittel umfassen ein Federelement und ein Befestigungselement. Das Federelement übt eine Kraft auf das Befestigungselement aus. Bei Befestigung des Rückenteils an den Befestigungsmitteln wird das Befestigungselement vom Rückenteil entgegen der Federkraft bewegt. Unter der Befestigung wird dabei im Rahmen dieser Beschreibung insbesondere der Vorgang des Befestigens des Rückenteils am Grundkörper verstanden. Auf diese Weise kann das Rückenteil durch Ausnutzung der Federkraft an den Befestigungsmitteln befestigt werden und durch Überwindung der Federkraft wieder gelöst werden.

Das abnehmbare Rückenteil hat insbesondere den Vorteil, dass der Grundkörper getrennt vom Rückenteil transportiert werden kann. Es müssen somit zwei einzelne voneinander gelöste und weniger sperrige Gegenstände anstatt eines einzelnen großen sperrigen Gegenstands transportiert werden. Es ist ebenfalls vorteilhaft, dass ein Benutzer zu Hause das Rückenteil an den Befestigungsmitteln befestigen kann, da er so ein für ihn passendes Rückenteil auswählen kann und nicht auf ein bestimmtes bereits am Grundkörper befestigtes Rückenteil festgelegt ist. Auch ein Austausch des Rückenteils wird vereinfacht. Dies ist insbesondere vorteilhaft, wenn ein Benutzer beispielsweise ein größeres oder kleineres Rückenteil verwenden möchte.

Außerdem wird das Handling des Sitzmöbelchassis bei der Produktion vereinfacht. Aufgrund von Arbeitsschutzbestimmungen und des Gewichts kann es unzulässig sein, dass ein einzelner Arbeiter sowohl den Grundkörper als auch das Rückenteil gleichzeitig trägt. Da das Rückenteil und der Grundkörper jeweils einzeln getragen werden können, kann somit ein einzelner Arbeiter das komplette Sitzmöbelchassis ohne Hilfsmittel transportieren.

Die Befestigungsmittel weisen einen Rastbereich auf. Das Rückenteil umfasst ein Rastelement. Das Rastelement ist im an den Befestigungsmitteln befestigten Zustand des Rückenteils im Rastbereich angeordnet.

Das Befestigungselement übt eine durch die Federkraft ausgelöste Rastkraft auf das Rastelement aus, wenn das Rastelement im Rastbereich angeordnet ist. Beispielsweise kann das Federelement in einem ersten Endbereich am Befestigungselement befestigt sein, wodurch ein zweiter Endbereich des Befestigungselements, der dem ersten Endbereich gegenüber angeordnet ist, die Rastkraft auf das Rastelement ausüben kann. In diesem Fall wirkt aufgrund der Federkraft ein Drehmoment auf das Befestigungselement, das wiederum die Rastkraft verursacht.

Es ist möglich, dass zusätzlich zur durch die Federkraft ausgelösten Rastkraft das Befestigungselement eine Kraft auf das Rastelement ausübt, die das Rastelement im Rastbereich hält.

Das Rastelement ist von oben in den Rastbereich einführbar. Es ist insbesondere möglich, dass bei der Befestigung des Rückenteils an den Befestigungsmitteln das Rastelement von oben in den Rastbereich eingeführt wird.

Das Rückenteil ist durch eine zweite Schwenkbewegung des Rückenteils an den Befestigungsmitteln befestigbar. Bei dieser zweiten Schwenkbewegung wird die Bewegung des Befestigungselements entgegen der Federkraft durch das Rastelement ausgelöst.

Nach einer Ausführungsform der Erfindung kann das Befestigungselement in einer ersten Position angeordnet sein, wenn das Rastelement im Rastbereich angeordnet ist.

Nach einer Ausführungsform der Erfindung kann die Federkraft eine Schwenkbewegung des Befestigungselements um die erste Schwenkachse von der ersten Position in eine zweite Position auslösen, wenn das Rastelement aus dem Rastbereich entfernt wird.

Nach einer Ausführungsform der Erfindung kann das Rastelement dazu ausgebildet sein, die Bewegung des Befestigungselements entgegen der Federkraft auszulösen. Beispielsweise kann das Rastelement bei der Befestigung des Rückenteils an den Befestigungsmitteln in Kontakt mit dem Befestigungselement kommen und so die Bewegung auslösen.

Nach einer Ausführungsform der Erfindung kann eine äußere Form des Rastelements an den Rastbereich angepasst sein. Der Rastbereich kann beispielsweise eine Rundung aufweisen, deren Radius in etwa einem Radius einer Rundung des Rastelements entspricht. So kann das Rastelement besonders gut im Rastbereich aufgenommen werden.

Nach einer Ausführungsform der Erfindung kann das Rückenteil ein Positionierungselement umfassen. Die Befestigungsmittel können einen Positionierungsbereich umfassen. Das Positionierungselement kann in den Positionierungsbereich einsetzbar sein. Das Positionierungselement kann eine zweite Schwenkachse definieren. Die zweite Schwenkbewegung kann um die zweite Schwenkachse erfolgen. Das Zusammenwirken des Positionierungselements mit dem Positionierungsbereich ist insbesondere vorteilhaft für eine besonders einfach Befestigung des Rückenteils an den Befestigungsmitteln.

Nach einer Ausführungsform der Erfindung kann eine äußere Form des Positionierungselements an eine Form des Positionierungsbereichs angepasst sein. Der Positionierungsbereich kann beispielsweise eine Rundung aufweisen, deren Radius in etwa einem Radius einer Rundung des Positionierungselements entspricht. So kann das Positionierungselement besonders gut im Positionierungsbereich aufgenommen werden.

Nach einer Ausführungsform der Erfindung kann das Positionierungselement von oben in den Positionierungsbereich einsetzbar sein.

Nach einer Ausführungsform der Erfindung kann das Rückenteil eine Rückenlehne umfassen. Unter einer Rückenlehne wird dabei ein Bereich verstanden, der nach Aufbringung einer Polsterung durch einen Benutzer beim bestimmungsgemäßen Gebrauch des Sitzmöbelchassis zur Anlehnung seines Rückens genutzt werden kann.

Nach einer Ausführungsform der Erfindung können die Befestigungsmittel Führungsmittel und ein Rastmittel umfassen. Das Befestigungselement kann ein Federmittel umfassen. Das Federmittel kann bei einer Bewegung des Befestigungselements im Führungsmittel geführt sein. Das Federmittel kann im Rastmittel einrastbar sein. Im eingerasteten Zustand des Federmittels kann das Befestigungselement das Rastelement freigeben. Hierunter wird im Rahmen dieser Beschreibung insbesondere verstanden, dass das Befestigungselement keine Kraft auf das Rastelement ausübt und das Rastelement von den Befestigungsmitteln entfernt werden kann.

Diese Ausführungsform ist vorteilhaft, da die Demontage des Rückenteils vereinfacht wird. Ein Benutzer kann das Befestigungselement feststellen, indem das Federmittel im Rastmittel eingerastet wird. Dann kann das Rückenteil bequem entfernt werden.

Nach einer Ausführungsform der Erfindung kann das Federmittel elastisch verformbar sein. Es kann insbesondere durch eine elastische Verformung aus dem Rastmittel entnehmbar sein. So kann das Federmittel besonders einfach vom Rastmittel getrennt werden. Anschließend kann das Befestigungselement wieder wie zuvor beschrieben verwendet werden.

Nach einer Ausführungsform der Erfindung kann das Befestigungselement einen ersten Vorsprung aufweisen, der in Eingriff mit einem zweiten Vorsprung eines schwenkbaren Halteelements bringbar ist. Der zweite Vorsprung kann aufgrund der Schwerkraft den ersten Vorsprung halten, wenn der erste Vorsprung in Eingriff mit dem zweiten Vorsprung ist, sodass das Befestigungselement in einer Stellung verbleibt, in der es das Rastelement freigibt.

Diese Ausführungsform ist insbesondere vorteilhaft für eine einfache Demontage der Rückenlehne. Ein Benutzer kann die Rückenlehne in Ruhe und ohne große Hindernisse demontieren, wenn das Befestigungselement das Rastelement freigibt.

Das Baukastensystem gemäß Anspruch 11 umfasst ein Sitzmöbelchassis nach einem der vorherigen Ansprüche und mehrere Rückenteile. Die Rückenteile weisen unterschiedliche Größen auf. Alle Rückenteile sind auf die gleiche Art an den Befestigungsmitteln befestigbar.

Unter einem Baukastensystem wird dabei im Rahmen dieser Beschreibung insbesondere ein System verstanden, bei dem unterschiedliche Rückenteile ohne Anpassungen der Rückenteile und der Befestigungsmittel an den Befestigungsmitteln befestigbar sind.

Das Baukastensystem ist besonders vorteilhaft, wenn beispielsweise ein Benutzer sein Rückenteil austauschen möchte. Er benötigt lediglich ein neues Rückenteil und kann den Austausch selbst vornehmen.

Beim Verfahren gemäß Anspruch 12 wird das Positionierungselement in den Positionierungsbereich eingesetzt. Danach wird die zweite Schwenkbewegung durchgeführt. Während der zweiten Schwenkbewegung verschwenkt das Rastelement das Befestigungselement um die erste Schwenkachse. Durch die zweite Schwenkbewegung wird außerdem das Rastelement in den Rastbereich, vorzugsweise von oben, eingeführt. Danach übt das Befestigungselement die Rastkraft auf das Rastelement aus. Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Dabei werden für gleiche oder ähnliche Bauteile und für Bauteile mit gleichen oder ähnlichen Funktionen dieselben Bezugszeichen verwendet. Darin zeigen:
- Fig. 1: vier seitliche Ansichten von Befestigungsmitteln nach einer Ausführungsform und Teilen eines Rückenteils;
- Fig. 2: eine schematische perspektivische Ansicht der Befestigungsmittel aus Fig. 1;
- Fig. 3: eine schematische seitliche Ansicht eines Sitzmöbelchassis nach einer Ausführungsform der Erfindung mit einem Grundkörper und einem am Grundkörper befestigten Rückenteil
- Fig. 4: eine schematische perspektivische Ansicht von Befestigungsmitteln nach einer Ausführungsform der Erfindung;
- Fig. 5A-E: mehrere schematische seitliche Ansichten der Ausführungsform aus Fig. 4;
- Fig. 6A-C: mehrere schematische seitliche Ansichten einer Montage eines Sitzmöbelchassis nach einer weiteren Ausführungsform der Erfindung; und
- Fig. 7A-D: mehrere schematische seitliche Ansichten einer Demontage des Sitzmöbelchassis aus Fig. 6A-C.

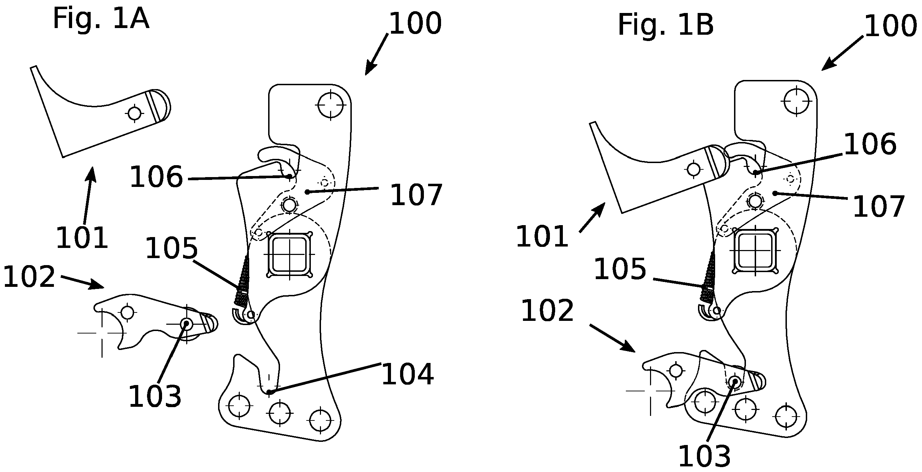

Die Befestigungsmittel 100 sind an einem in den Figuren 1A bis 1D nicht dargestellten Grundkörper eines Sitzmöbelchassis angeordnet. An den Befestigungsmitteln kann ein Rückenteil befestigt werden. Zu diesem Zweck weist das Rückenteil ein Rastelement 101 und ein Positionierungselement 102 auf. Das Positionierungselement 102 umfasst wiederum einen Bolzen 103. Die Befestigungsmittel umfassen einen Positionierungsbereich 104, ein Federelement 105, einen Rastbereich 106 und ein Befestigungselement 107.

Das Federelement 105 ist mit dem Befestigungselement 107 verbunden und übt eine Federkraft auf das Befestigungselement 107 aus. Das Befestigungselement 107 ist um eine erste Schwenkachse schwenkbar.

**In** den Figuren 1A bis 1D ist in zeitlicher Abfolge der Befestigungsvorgang des Rückenteils an den Befestigungsmitteln 100 dargestellt. Zunächst sind - wie in Figur 1A dargestellt - das Rückenteil und die Befestigungsmittel 100 voneinander getrennt. Unter Verwendung des Positionierungselements 102 wird dann eine Verbindung zwischen den Befestigungsmitteln 100 und dem Rückenteil hergestellt. Dabei wird der Bolzen 103 in den Positionierungsbereich 104 eingesetzt. Zu diesem Zweck ist es vorteilhaft, dass die äußere Form des Bolzens 103 an die Form des Positionierungsbereichs 104 angepasst ist. Außerdem können der Bolzen 103 und der Positionierungsbereich 104 die gleiche Farbe aufweisen, sodass einem Benutzer die Montage vereinfacht wird, da ihm durch die gleiche Farbe verdeutlicht wird, dass diese beiden Bauteile miteinander verbunden werden müssen. Alternativ oder zusätzlich kann am Bolzen 103 und am Positionierungsbereich 104 eine tastbare Formmarkierung vorgesehen sein. Die Formmarkierungen können gleich oder identisch ausgebildet sein und blinde Benutzer bei der Montage unterstützen. Der Bolzen 103 definiert so eine zweite Schwenkachse, um die das Rückenteil schwenkbar ist. Dieser Zustand ist in Figur 1B dargestellt.

Um das Einsetzen des Bolzens 103 in den Positionierungsbereich 104 zu vereinfachen, weist das Positionierungselement 102 eine Schräge auf, über die das Positionierungselement 102 gleiten kann, sodass der Bolzen 103 in den Positionierungsbereich 104 eingeführt wird.

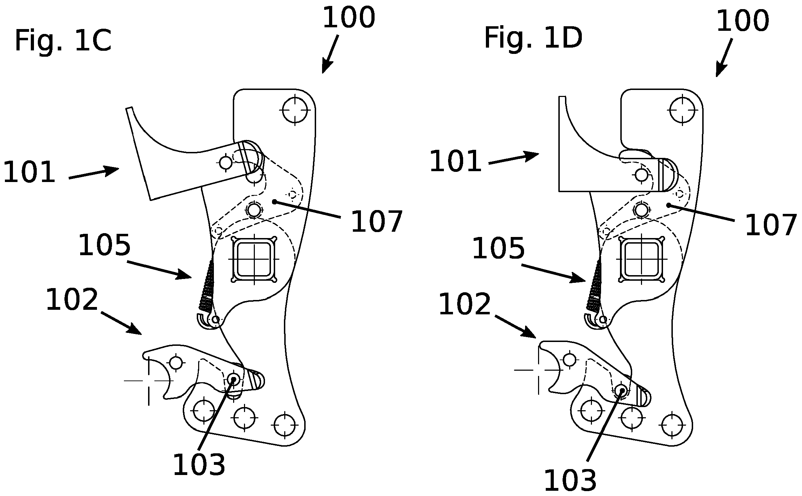

Anschließend wird das Rückenteil um die zweite Schwenkachse geschwenkt. Dabei gelangt das Rastelement 101 in Kontakt mit dem Befestigungselement 107 und verschwenkt es entgegen der Federkraft um die erste Schwenkachse. Dabei ist es vorteilhaft, dass das Rastelement 101 an der während des Befestigungsvorgangs dem Befestigungselement 107 zugewandten Seite eine Schräge aufweist, sodass eine Einführung vereinfacht wird. Dieser Zustand ist in Figur 1C dargestellt.

Wenn die Schwenkbewegung des Rückenteils um die zweite Schwenkachse weitergeführt wird, gelangt das Rastelement 101 in den Rastbereich 106. Zu diesem Zweck ist es vorteilhaft, dass die äußere Form eines Abschnitts des Rastelements 101 an die Form des Rastbereichs 106 angepasst ist. In dieser Position übt das Befestigungselement 107 eine Rastkraft auf das Rastelement 101 aus, die durch das Federelement 105 verursacht wird. Auf diese Weise wird das Rastelement 101 sicher im Rastbereich 106 gehalten Dieser Zustand ist in Figur 1D dargestellt.

Das Befestigungselement 107 weist einen hakenförmigen Vorsprung auf, der einen Teil des Rastelements 101 umgreift, wenn das Rastelement 101 im Rastbereich 106 angeordnet ist. Der hakenförmige Vorsprung weist eine Krümmung auf. Im Bereich der Krümmung ist das Befestigungselement 107 in Kontakt mit dem Rastelement 101, wenn das Rastelement 101 im Rastbereich 106 angeordnet ist. Es ist möglich, dass die Krümmung einen inkonstanten Krümmungsradius aufweist. **In** der Nähe eins Endes des Befestigungselements 107 kann der Krümmungsradius kleiner sein als in einem Bereich, der weiter entfernt vom Ende liegt.

Der inkonstante Krümmungsradius hat insbesondere den Vorteil, dass beim Einsetzen des Rastelements 101 in den Rastbereich 106 das Befestigungselement 107 das Rastelement 101 in den Rastbereich hineinzieht und im eingesetzten Zustand einklemmt. So wird das Rastelement 101 spielfrei im Rastbereich 106 gehalten.

Das Rastelement 101 kann farblich an den Rastbereich 106 angepasst sein. Beispielsweise kann das Rastelement 101 die gleiche Farbe wie der Rastbereich 106 aufweisen. So wird die Montage für einen Benutzer weiter vereinfacht.

Zusätzlich oder alternativ können Formmarkierungen am Rastbereich 106 und am Rastelement 101 vorgesehen sein, die zueinander passen. Beispielsweise kann am Rastbereich 106 die gleiche Formmarkierung wie am Rastelement 101 angeordnet sein. Unter einer Formmarkierung wird dabei im Rahmen dieser Beschreibung eine ertastbare Markierung verstanden. Sie kann beispielsweise als Hervorhebung oder Vertiefung ausgebildet sein. Die Formmarkierung kann blinde Benutzer bei der Montage unterstützen.

Es ist außerdem möglich, dass das Rastelement 101 und/oder der Rastbereich 106 ein magnetisches Element umfasst, sodass das Rastelement 101 und der Rastbereich 106 mit einer Magnetkraft zusammengehalten werden. Bei der Montage ist dies besonders vorteilhaft, da der Benutzer aufgrund der Magnetkraft merkt, wie der richtige Einsetzvorgang abläuft. Der Einsetzvorgang kann beispielsweise durch die Magnetkraft geleitet werden.

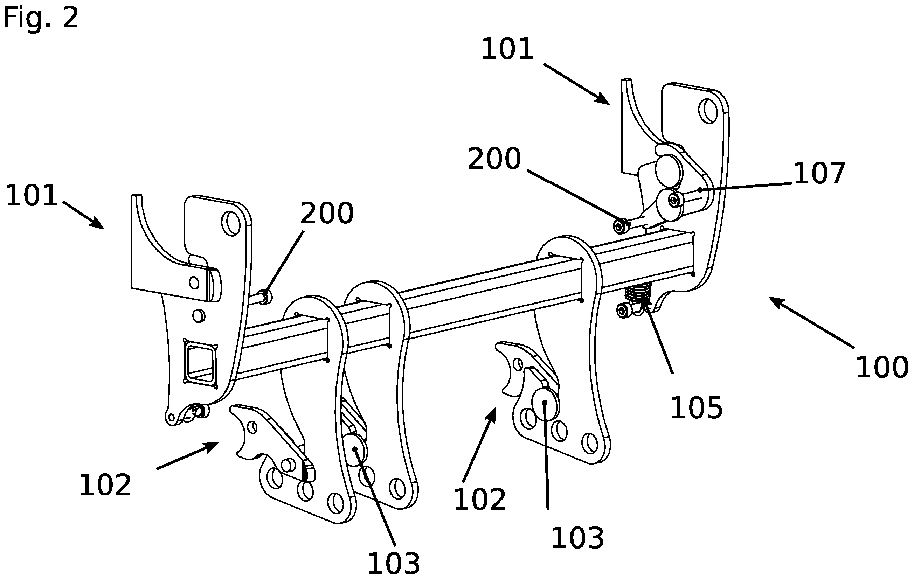

In Figur 2 sind die Befestigungsmittel 100 dargestellt, wobei das Rückenteil an den Befestigungsmitteln 100 befestigt ist. Dieser Zustand entspricht also dem in Figur 1D dargestellten Zustand. Ferner ist in Figur 2 ersichtlich, dass die Befestigungsmittel 100 zwei Befestigungselemente 107 umfassen. Das Rückenteil umfasst mehrere Positionierungselemente 102. Die Befestigungsmittel 100 umfassen eine dementsprechende Anzahl an Positionierungsbereichen. In Figur 2 sind außerdem zwei Federbefestigungsmittel 200 dargestellt, an denen jeweils eines der Federelement 105 befestigt wird, um die Federkraft auf das jeweilige Befestigungselement 107 auszuüben.

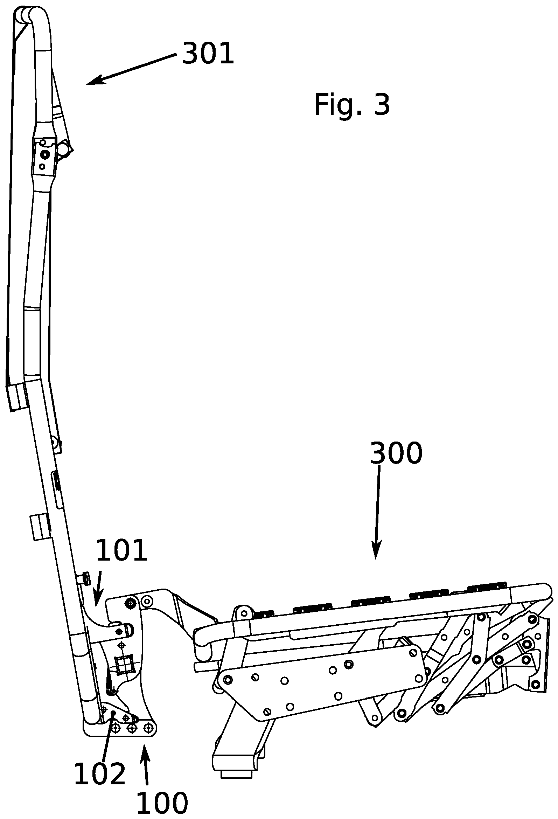

Das in Figur 3 dargestellte Sitzmöbelchassis umfasst einen Grundkörper 300 mit einem Sitzflächenrahmen, die am Grundkörper 300 Befestigungsmitteln 100 und ein an den Befestigungsmitteln 100 befestigtes Rückenteil 301. Das Rückenteil 301 umfasst das Positionierungselement 102 und das Rastelement 101. Das Rückenteil 301 ist mit dem Rastelement 101 und dem Positionierungselement 102 an den Befestigungsmitteln 100 befestigt.

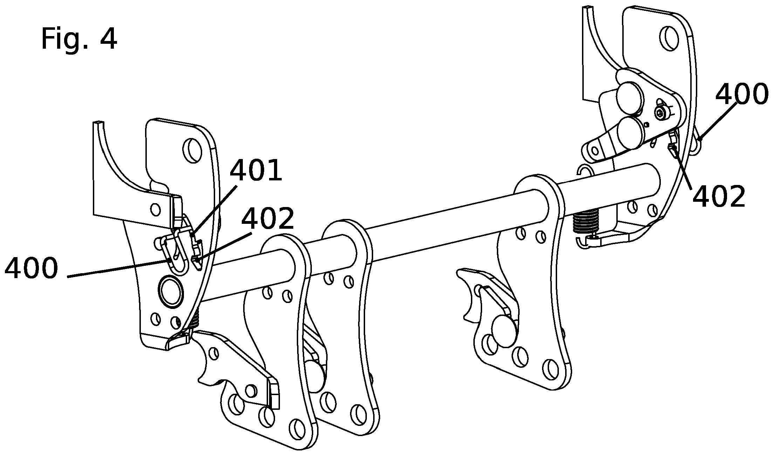

Die in Figur 4 dargestellte Ausführungsform unterscheidet sich von der Ausführungsform aus Figur 2 insbesondere dadurch, dass das Befestigungselement 107 ein Federmittel 400 umfasst, das in Führungsmitteln 401 geführt und in einem Rastmittel 402 einrastbar ist.

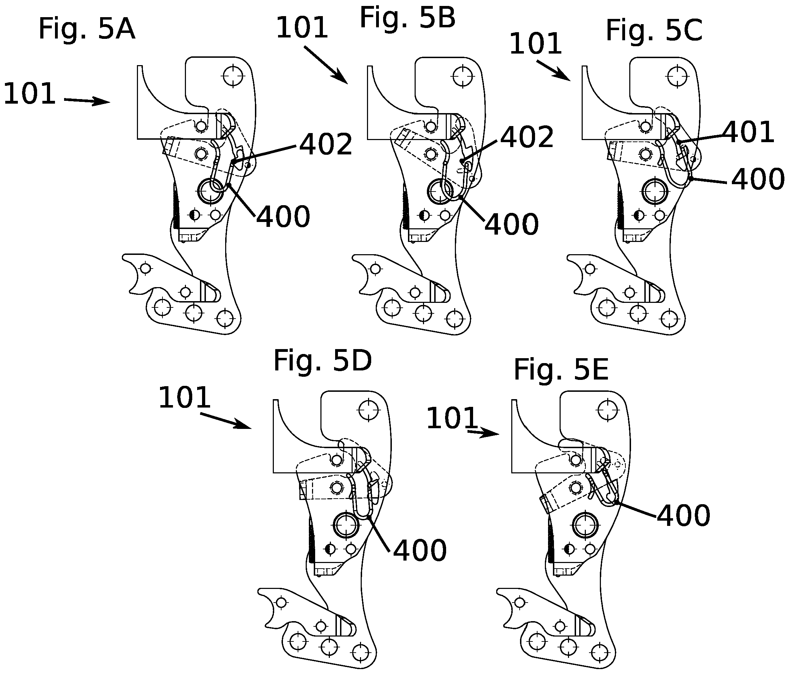

Die Funktion der Ausführungsform aus Figur 4 lässt sich anhand der Figuren 5A bis E nachvollziehen. Wenn das Rastelement 101 von den Befestigungsmitteln 100 gelöst werden soll, wird das Befestigungselement 107 verschwenkt, sodass das Rastelement 101 freigegeben wird. In diesem Zustand übt das Rastelement 101 keine Kraft mehr auf das Befestigungselement 107 aus. Während der Verschwenkung des Befestigungselements 107 wird das Federmittel 400 in den Führungsmitteln 401 geführt und rastet im Rastmittel 402 ein, sodass das Befestigungselement 107 nicht mehr automatisch zurückbewegt wird. Dieser Zustand ist in Figur 5A dargestellt.

Nun kann das Rückenteil entfernt werden. Anschließend kann das Federmittel 400 elastisch verformt werden, sodass es aus dem Rastmittel 402 herausbewegt wird (Fig. 5B). Es wird durch die Federkraft des Federelements 105 zurück verschwenkt (Fig. 5C) und gelangt an einen Anschlag. Dann kann das Federmittel 400 wieder zurück verformt werden, sodass es in die Führungsmittel 401 gelangt. Anschließend wird das Befestigungselement 107 weiter zurück verschwenkt, sodass es wieder zur Befestigung des Rastelements 101 geeignet ist.

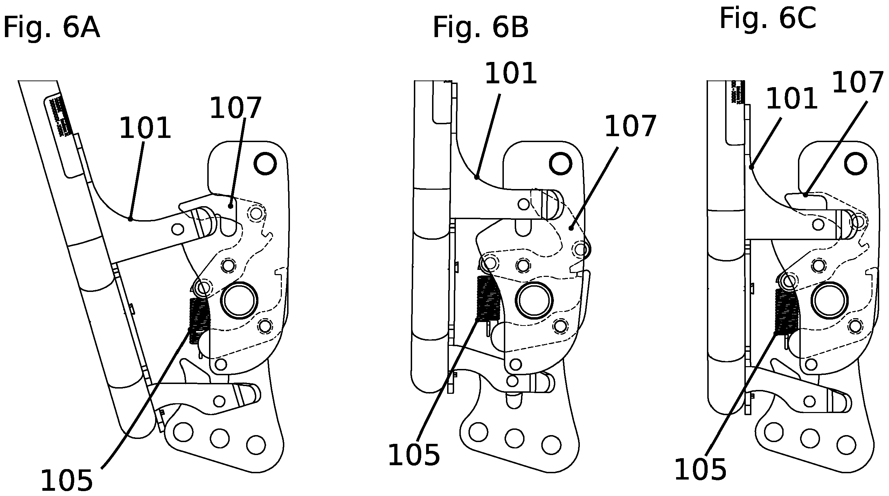

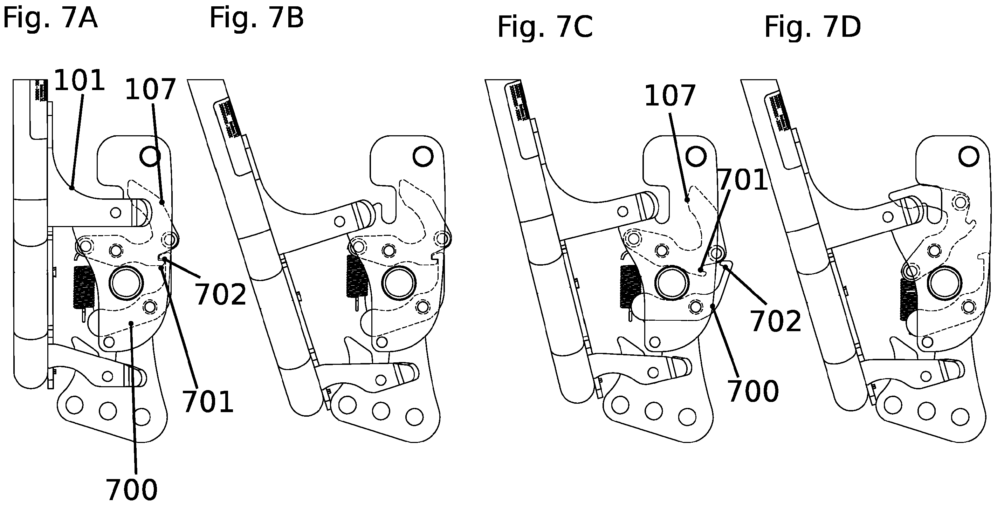

Die Ausführungsform in den Figuren 6 und 7 unterscheidet sich insbesondere dadurch von der Ausführungsform aus den Figuren 4 und 5, wie das Befestigungselement 107 bei der Demontage gehalten wird, damit das Rückenteil entfernt werden kann.

Dabei ist die Montage in den Figuren 6A bis C dargestellt. Zunächst wird das Befestigungselement 107 durch das Rastelement 101 verschwenkt. Für die Demontage, die in den Figuren 7A bis 7D dargestellt ist, wird ein Vorsprung 701 des Befestigungselements 107 in Eingriff mit einem Vorsprung 702 eines schwenkbaren Halteelements 700 gebracht. Der Vorsprung 702 des schwenkbaren Halteelements 700 hält dann aufgrund der Schwerkraft den Vorsprung 701 des Befestigungselements 107, sodass das Befestigungselement in einer Stellung verbleibt, in der es das Rastelement 101 freigibt.

Nach Entnahme des Rastelements 101 aus dem Rastbereich können die beiden Vorsprünge 701 und 702 voneinander gelöst werden, indem sowohl das Befestigungselement als auch das Halteelement 700 verschwenkt werden. In Figur 7D ist dann wieder die Ausgangsstellung zur Montage, wie auch in Figur 6A, dargestellt.

## Patentansprüche

1. Sitzmöbelchassis, umfassend einen Grundkörper (300), Befestigungsmittel (100) und ein Rückenteil (301), wobei die Befestigungsmittel (100) am Grundkörper (300) angeordnet sind, wobei das Rückenteil (301) lösbar an den Befestigungsmitteln (100) befestigbar ist, wobei die Befestigungsmittel (100) ein Federelement (105) und ein Befestigungselement (107) umfassen, wobei das Federelement (105) eine Federkraft auf das Befestigungselement (107) ausübt, wobei bei Befestigung des Rückenteils (301) an den Befestigungsmitteln (100) das Befestigungselement (107) vom Rückenteil (301) entgegen der Federkraft bewegt wird, wobei die Befestigungsmittel (100) einen Rastbereich (106) aufweisen, wobei das Rückenteil (301) ein Rastelement (101) umfasst, wobei das Rastelement (101) im an den Befestigungsmitteln (100) befestigten Zustand des Rückenteils (301) im Rastbereich (106) angeordnet ist, wobei das Befestigungselement (107) eine durch die Federkraft ausgelöste Rastkraft auf das Rastelement (101) ausübt, wenn das Rastelement (101) im Rastbereich (106) angeordnet ist, wobei das Rastelement (101) von oben in den Rastbereich (106) einführbar ist, **dadurch gekennzeichnet, dass** das Rückenteil durch eine zweite Schwenkbewegung des Rückenteils an den Befestigungsmitteln befestigbar ist, wobei bei dieser zweiten Schwenkbewegung die Bewegung des Befestigungselements entgegen der Federkraft durch das Rastelement ausgelöst wird.

2. Sitzmöbelchassis nach Anspruch 1, **dadurch gekennzeichnet, dass** das Befestigungselement (107) um eine erste Schwenkachse schwenkbar ist, wobei die Bewegung entgegen der Federkraft eine erste Schwenkbewegung um die erste Schwenkachse ist.

3. Sitzmöbelchassis nach einem der beiden vorherigen Ansprüche, **dadurch gekennzeichnet, dass** das Befestigungselement (107) in einer ersten Position angeordnet ist, wenn das Rastelement (101) im Rastbereich (106) angeordnet ist.

4. Sitzmöbelchassis nach dem vorherigen Anspruch, **dadurch gekennzeichnet, dass** die Federkraft eine Schwenkbewegung des Befestigungselements (107) um die erste Schwenkachse von der ersten Position in eine zweite Position auslöst, wenn das Rastelement (101) aus dem Rastbereich (106) entfernt wird.

5. Sitzmöbelchassis nach einem der vier vorherigen Ansprüche, **dadurch gekennzeichnet, dass** das Rastelement (101) dazu ausgebildet ist, die Bewegung des Befestigungselements (107) entgegen der Federkraft auszulösen.

6. Sitzmöbelchassis nach einem der fünf vorherigen Ansprüche, **dadurch gekennzeichnet, dass** eine äußere Form des Rastelements (101) an den Rastbereich (106) angepasst ist.

7. Sitzmöbelchassis nach einem der vorherigen Ansprüche, **dadurch gekennzeichnet, dass** das Rückenteil (301) ein Positionierungselement (102) umfasst, wobei die Befestigungsmittel (100) einen Positionierungsbereich (104) umfassen, wobei das Positionierungselement (102) in den Positionierungsbereich (104) einsetzbar ist, wobei das Positionierungselement (102) eine zweite Schwenkachse definiert, und wobei die zweite Schwenkbewegung um die zweite Schwenkachse erfolgt.

8. Sitzmöbelchassis nach einem der vorherigen Ansprüche, **dadurch gekennzeichnet, dass** die Befestigungsmittel (100) Führungsmittel (401) und ein Rastmittel (402) umfassen, wobei das Befestigungselement (107) ein Federmittel (400) umfasst, wobei das Federmittel (400) bei einer Bewegung des Befestigungselements (107) im Führungsmittel (401) geführt ist, wobei das Federmittel (400) im Rastmittel (402) einrastbar ist, und wobei im eingerasteten Zustand des Federmittels (400) das Befestigungselement (107) das Rastelement (101) freigibt.

9. Sitzmöbelchassis nach dem vorherigen Anspruch, **dadurch gekennzeichnet, dass** das Federmittel (400) elastisch verformbar ist und durch eine elastische Verformung aus dem Rastmittel (402) entnehmbar ist.

10. Sitzmöbelchassis nach einem der Ansprüche 1 bis 7, **dadurch gekennzeichnet, dass** das Befestigungselement (107) einen ersten Vorsprung (701) aufweist, der in Eingriff mit einem zweiten Vorsprung (702) eines schwenkbaren Halteelements (700) bringbar ist, wobei der zweite Vorsprung (702) aufgrund der Schwerkraft den ersten Vorsprung (701) hält, wenn der erste Vorsprung (701) in Eingriff mit dem zweiten Vorsprung (702) ist, sodass das Befestigungselement (107) in einer Stellung verbleibt, in der es das Rastelement (101) freigibt

11. Baukastensystem, umfassend ein Sitzmöbelchassis nach einem der vorherigen Ansprüche und mehrere Rückenteile (301), wobei die Rückenteile (301) unterschiedliche Größen aufweisen, und wobei alle Rückenteile (301) auf die gleiche Art an den Befestigungsmitteln (100) befestigbar sind.

12. Verfahren zur Befestigung eines Rückenteils (301) eines Sitzmöbelchassis nach einem der Ansprüche 1 bis 10 an den Befestigungsmitteln (100) des Sitzmöbelchassis, umfassend die folgenden Schritte:
- Einsetzen des Positionierungselements (102) in den Positionierungsbereichs (104);
- Durchführen der zweiten Schwenkbewegung, wobei während der zweiten Schwenkbewegung das Rastelement (101) das Befestigungselement (107) um die erste Schwenkachse verschwenkt, und wobei durch die zweite Schwenkbewegung das Rastelement (101) in den Rastbereich (106) eingeführt wird; und
- Ausübung der Rastkraft auf das Rastelement (101) durch das Befestigungselement (107).

## Claims

1. Seating furniture chassis, comprising a base body (300), fastening means (100) and a back part (301), wherein the fastening means (100) are arranged on the base body (300), wherein the back part (301) can be fastened releasably to the fastening means (100), wherein the fastening means (100) comprise a spring element (105) and a fastening element (107), wherein the spring element (105) exerts a spring force on the fastening element (107), wherein, when the back part (301) is fastened to the fastening means (100), the fastening element (107) is moved by the back part (301) counter to the spring force, wherein the fastening means (100) have a latching region (106), wherein the back part (301) comprises a latching element (101), wherein the latching element (101) is arranged in the latching region (106) when the back part (301) is fastened to the fastening means (100), wherein the fastening element (107) exerts a latching force, which is triggered by the spring force, on the latching element (101) when the latching element (101) is arranged in the latching region (106), wherein the latching element (101) can be introduced from above into the latching region (106), **characterized in that** the back part can be fastened to the fastening means by a second pivoting movement of the back part, wherein, during this second pivoting movement, the movement of the fastening element counter to the spring force is triggered by the latching element.

2. Seating furniture chassis according to Claim 1, **characterized in that** the fastening element (107) can be pivoted about a first pivot axis, wherein the movement counter to the spring force is a first pivoting movement about the first pivot axis.

3. Seating furniture chassis according to either of the two preceding claims, **characterized in that** the fastening element (107) is arranged in a first position when the latching element (101) is arranged in the latching region (106).

4. Seating furniture chassis according to the preceding claim, **characterized in that** the spring force triggers a pivoting movement of the fastening element (107) about the first pivot axis from the first position into a second position when the latching element (101) is removed from the latching region (106).

5. Seating furniture chassis according to one of the four preceding claims, **characterized in that** the latching element (101) is designed to trigger the movement of the fastening element (107) counter to the spring force.

6. Seating furniture chassis according to one of the five preceding claims, **characterized in that** an outer shape of the latching element (101) is adapted to the latching region (106).

7. Seating furniture chassis according to one of the preceding claims, **characterized in that** the back part (301) comprises a positioning element (102), wherein the fastening means (100) comprise a positioning region (104), wherein the positioning element (102) can be inserted into the positioning region (104), wherein the positioning element (102) defines a second pivot axis, and wherein the second pivoting movement takes place about the second pivot axis.

8. Seating furniture chassis according to one of the preceding claims, **characterized in that** the fastening means (100) comprise guide means (401) and a latching means (402), wherein the fastening element (107) comprises a spring means (400), wherein the spring means (400) is guided in the guide means (401) during a movement of the fastening element (107), wherein the spring means (400) can be latched in the latching means (402), and wherein, in the latched state of the spring means (400), the fastening element (107) releases the latching element (101).

9. Seating furniture chassis according to the preceding claim, **characterized in that** the spring means (400) is elastically deformable and can be removed from the latching means (402) by an elastic deformation.

10. Seating furniture chassis according to one of Claims 1 to 7, **characterized in that** the fastening element (107) has a first projection (701) which can be brought into engagement with a second projection (702) of a pivotable holding element (700), wherein the second projection (702) holds the first projection (701) on account of the force of gravity when the first projection (701) is in engagement with the second projection (702), such that the fastening element (107) remains in a position in which it releases the latching element (101).

11. Modular system comprising a seating furniture chassis according to one of the preceding claims and a plurality of back parts (301), wherein the back parts (301) have different sizes, and wherein all the back parts (301) can be fastened to the fastening means (100) in the same manner.

12. Method for fastening a back part (301) of a seating furniture chassis according to one of Claims 1 to 10 to the fastening means (100) of the seating furniture chassis, comprising the following steps:
- inserting the positioning element (102) into the positioning region (104);
- performing the second pivoting movement, wherein, during the second pivoting movement, the latching element (101) pivots the fastening element (107) about the first pivot axis, and wherein, by means of the second pivoting movement, the latching element (101) is inserted into the latching region (106); and
- exerting the latching force on the latching element (101) by means of the fastening element (107).

## Revendications

1. Châssis de meuble d'assise, comprenant un corps de base (300), des moyens de fixation (100) et une partie arrière (301), les moyens de fixation (100) étant disposés sur le corps de base (300), la partie arrière (301) pouvant être fixée de manière amovible aux moyens de fixation (100), les moyens de fixation (100) comprenant un élément de ressort (105) et un élément de fixation (107), l'élément de ressort (105) exerçant une force de ressort sur l'élément de fixation (107), lors de la fixation de la partie arrière (301) aux moyens de fixation (100), l'élément de fixation (107) étant déplacé par la partie arrière (301) à l'encontre de la force de ressort, les moyens de fixation (100) présentant une zone d'encliquetage (106), la partie arrière (301) comprenant un élément d'encliquetage (101), l'élément d'encliquetage (101) étant disposé dans la zone d'encliquetage (106) dans l'état de la partie arrière (301) fixée aux moyens de fixation (100), l'élément de fixation (107) exerçant une force d'encliquetage déclenchée par la force de ressort sur l'élément d'encliquetage (101) lorsque l'élément d'encliquetage (101) est disposé dans la zone d'encliquetage (106), l'élément d'encliquetage (101) pouvant être introduit par le haut dans la zone d'encliquetage (106), **caractérisé en ce que** la partie arrière peut être fixée aux moyens de fixation par un deuxième mouvement de pivotement de la partie arrière, lors de ce deuxième mouvement de pivotement, le mouvement de l'élément de fixation à l'encontre de la force de ressort étant déclenché par l'élément d'encliquetage.

2. Châssis de meuble d'assise selon la revendication 1, **caractérisé en ce que** l'élément de fixation (107) peut pivoter autour d'un premier axe de pivotement, le mouvement à l'encontre de la force de ressort étant un premier mouvement de pivotement autour du premier axe de pivotement.

3. Châssis de meuble d'assise selon l'une quelconque des deux revendications précédentes, **caractérisé en ce que** l'élément de fixation (107) est disposé dans une première position lorsque l'élément d'encliquetage (101) est disposé dans la zone d'encliquetage (106).

4. Châssis de meuble d'assise selon la revendication précédente, **caractérisé en ce que** la force de ressort déclenche un mouvement de pivotement de l'élément de fixation (107) autour du premier axe de pivotement de la première position dans une deuxième position lorsque l'élément d'encliquetage (101) est retiré de la zone d'encliquetage (106).

5. Châssis de meuble d'assise selon l'une quelconque des quatre revendications précédentes, **caractérisé en ce que** l'élément d'encliquetage (101) est réalisé pour déclencher le mouvement de l'élément de fixation (107) à l'encontre de la force de ressort.

6. Châssis de meuble d'assise selon l'une quelconque des cinq revendications précédentes, **caractérisé en ce qu'**une forme extérieure de l'élément d'encliquetage (101) est adaptée à la zone d'encliquetage (106).

7. Châssis de meuble d'assise selon l'une quelconque des revendications précédentes, **caractérisé en ce que** la partie arrière (301) comprend un élément de positionnement (102), les moyens de fixation (100) comprenant une zone de positionnement (104), l'élément de positionnement (102) pouvant être inséré dans la zone de positionnement (104), l'élément de positionnement (102) définissant un deuxième axe de pivotement, et le deuxième mouvement de pivotement ayant lieu autour du deuxième axe de pivotement.

8. Châssis de meuble d'assise selon l'une quelconque des revendications précédentes, **caractérisé en ce que** les moyens de fixation (100) comprennent des moyens de guidage (401) et un moyen d'encliquetage (402), l'élément de fixation (107) comprenant un moyen de ressort (400), le moyen de ressort (400) étant guidé lors d'un mouvement de l'élément de fixation (107) dans le moyen de guidage (401), le moyen de ressort (400) pouvant être encliqueté dans le moyen d'encliquetage (402), et l'élément de fixation (107) libérant l'élément d'encliquetage (101) dans l'état encliqueté du moyen de ressort (400).

9. Châssis de meuble d'assise selon la revendication précédente, **caractérisé en ce que** le moyen de ressort (400) peut être déformé élastiquement et peut être retiré du moyen d'encliquetage (402) par une déformation élastique.

10. Châssis de meuble d'assise selon l'une quelconque des revendications 1 à 7, **caractérisé en ce que** l'élément de fixation (107) présente une première saillie (701) qui peut être amenée en prise avec une deuxième saillie (702) d'un élément de retenue pivotant (700), la deuxième saillie (702) retenant la première saillie (701) en raison de la force de gravité lorsque la première saillie (701) est en prise avec la deuxième saillie (702), de sorte que l'élément de fixation (107) reste dans une position dans laquelle il libère l'élément d'encliquetage (101).

11. Système modulaire, comprenant un châssis de meuble d'assise selon l'une quelconque des revendications précédentes et plusieurs parties arrière (301), les parties arrière (301) présentant des tailles différentes, et toutes les parties arrière (301) pouvant être fixées de la même manière aux moyens de fixation (100).

12. Procédé de fixation d'une partie arrière (301) d'un châssis de meuble d'assise selon l'une quelconque des revendications 1 à 10 aux moyens de fixation (100) du châssis de meuble d'assise, comprenant les étapes suivantes :
- insertion de l'élément de positionnement (102) dans la zone de positionnement (104) ;
- réalisation du deuxième mouvement de pivotement, l'élément d'encliquetage (101) faisant pivoter l'élément de fixation (107) autour du premier axe de pivotement pendant le deuxième mouvement de pivotement, et l'élément d'encliquetage (101) étant introduit dans la zone d'encliquetage (106) par le deuxième mouvement de pivotement ; et
- application de la force d'encliquetage sur l'élément d'encliquetage (101) par l'élément de fixation (107).
